# EUROPEAN PATENT SPECIFICATION

(11) **EP 1 982 877 B1**
(45) Date of publication and mention of the grant of the patent: **01.02.2012**
(21) Application number: 08151242.8
(22) Date of filing: 08.02.2008
(51) Int. Cl.: B60R 25/02

(54) **Steering lock for vehicles**
Lenksperre für Fahrzeuge
Verrouillage de direction pour véhicules

(30) Priority: 09.02.2007 IT TO20070100
(43) Date of publication of application: 22.10.2008
(73) Proprietor: TRW Automotive Italia S.r.l., Torino (IT)
(72) Inventor: Graglia, Daniele, 10026 Santena (IT)
(74) Representative: Jorio, Paolo

(56) References cited:
- EP-A1- 1 072 486
- EP-A1- 1 323 600
- DE-U1- 9 208 698

## Description

The present invention relates to a steering lock for vehicles.

As known, generally vehicles and specifically cars are normally provided with a steering lock for locking the steering shaft actuated by the steering wheel of the vehicle in an angularly fixed position with respect to a fixed tubular body surrounding the steering shaft itself.

The steering lock includes a shifting locking member, commonly known as "tooth", and an actuating device of the locking member for displacing the locking member itself between a retracted home position, in which the free rotation of the steering shaft with respect to the fixed tubular body is allowed, and an advanced locking position, in which the locking member crosses an opening obtained in the fixed tubular body and is partially inserted in a radial retaining seat obtained on the external periphery of the steering shaft.

The shifting member and the actuating device are generally accommodated in an attachment and supporting structure, which, in addition to maintain the shifting member and the actuating device in fixed, invariable positions, must also ensure a high resistance to all possible tampering attempts or acts of vandalism. For this purpose, the attachment and supporting structure normally consists of one or more hollow bodies made of metal material and includes an end half-collar attachment portion which surrounds the tubular body and is integrally connected to the tubular body itself, generally by means of shear screws, and an accommodating and supporting portion of the tooth and of the actuating device thereof, as disclosed, for example, in generic DE 9208698 U1.

Although, on one hand, the construction of the aforesaid structure made of metal material displays a valid obstacle to tampering attempts and allows to arrange and maintain the shifting member and the actuating member in fixed, invariable positions in any functional condition, on the other it has a heavy weight which may not be reduced beyond given values unless to the detriment of strength.

From a functional point of view, the known structures are machined so as to make the sliding of the shifting member as easy as possible, above all for containing the necessary displacement action required by the actuating device. However, such an embodiment has proven not to be fully satisfactory since, in case of repeated rotary oscillations of the steering shaft itself about the locking position thereof, the displacing member tends to progressively retract releasing the seat and freeing the steering shaft from its angular constraint with the fixed tubular body.

It is the object of the present invention to make a steering lock for vehicles, which allows to simply and cost-effectively solve the aforementioned problems.

According to the present invention, a steering lock for vehicles is made as claimed in Claim 1.

The invention will now be described with reference to the accompanying drawings which illustrate a non-limitative embodiment thereof, in which:
figure 1 is a perspective view with parts removed for clarity of a steering assembly provided with a preferred embodiment of a steering lock according to the present invention; and
figure 2 is a perspective view, on enlarged scale, of a detail in figure 1.

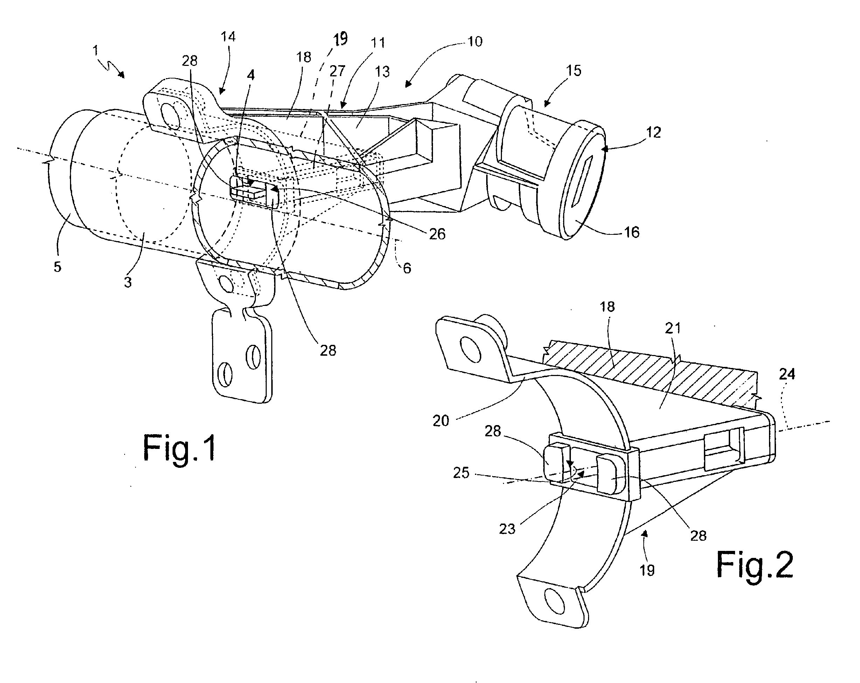

In figure 1, numeral 1 indicates as a whole a steering assembly (partially shown) which includes a fixed tubular body 3 displaying a side opening 4, and a steering shaft 5. The steering shaft 5 is arranged inside the fixed tubular body 3 to rotate about a fixed axis 6, and is provided with an external peripheral retaining seat (intrinsically known and not shown) adapted to be arranged at the opening 4.

Again with reference to figure 1, a steering lock 10 is associated to the steering assembly 1, the steering lock includes a supporting and accommodating structure 11 and a locking device 12, intrinsically known and partially visible in figure 1, to maintain the steering shaft 5 in a fixed angular position with respect to the tubular body 3.

The structure 11 includes a hollow elongated intermediate portion 13 and two opposite end portions, indicated by numerals 14 and 15, of which portion 14 is half-collar shaped and integrally connected to the fixed tubular body 3, in a known manner and not described in detail, while the portion 15 is a cylindrical tubular portion accommodating a lock 16 controllable by means of a key (not shown) of the locking device 12.

According to the invention, the structure 11 includes an external casing 18 made of plastic material, and an insert 19 (figure 2) of metal material, preferably Zama®, on which the plastic material is co-moulded.

Specifically, the insert 19 is accommodated in portions 13 and 14 and includes, in turn, a half-collar end portion 20 embedded in the portion 14 and a hollow rod 21, which protrudingly extends from the collar portion 20, is tapered towards the cylindrical portion 15 and is embedded in the intermediate portion 13.

The rod 21 delimits a rectilinear pipe 23, which displays a quadrangular section, extends coaxially to a longitudinal direction 24 orthogonally intersecting the axis 6 of the steering shaft 5, and communicates with the inside of the portion 14 through a quadrangular opening 25 obtained through the portions 14 and 20.

The pipe 23 defines a sliding guide for a shifting angular-locking member 26, intrinsically known, which is part of the device 12 and the longitudinal end shaped headed of which engages, in a known manner, the seat of the steering shaft. In the specifically described example, the shifting member 26 displays a rough side surface 27, displaying a roughness conveniently variable between 3 and 7 Ra. Conveniently, the indicated roughness is obtained by subjecting the side surface 27 to a phosphating treatment, and conveniently to a micro-phosphating treatment.

Again with reference to figure 1 and, specifically, to figure 2, the insert 19 further includes two protrusions 28, which protrudingly extend from the collar portion 20 parallelly to the direction 24 and in positions transversally spaced to each other, so as to constitute an extension of the pipe 23 and thus of the guide of the shifting member 26. Each protrusion 28 displays a quadrangular transversal section and external dimensions approximating by defect the internal dimensions of the opening 4, in which they are inserted to withhold the insert 19 in a predetermined functional position with respect to the tubular body 3 when the structure 11 is stably connected to the tubular body 3 itself.

From the above, it is apparent that the described steering lock 10 displays a considerably lighter weight than the known steering locks, since the supporting and attachment structure 11 is partially made of plastic material. However, from the above, it is also apparent that the presence and the conformation of the insert allow to make a similarly stiff and stable support capable of satisfying various type-approval requirements and of defining a suitable resistance to tampering attempts. This is also due to the presence of the protrusions 28, which perform the double function of positioning the structure 11 and withstanding loads directed transversally to the axis 6, as well as guiding the shifting member 26.

Furthermore, making a shifting member with rough side surfaces allows to withhold the head of the shifting member constantly engaged in the seat of the steering shaft, regardless of the operating conditions of the steering assembly and regardless of the stress exerted on the steering assembly itself, including those deriving from repeated rotary oscillations of the steering shaft 5 about the angular-locking position. The withholding inside the aforesaid seat is then decisively stronger if the shifting member 26 cooperates by sliding with specific materials, including the Zama.

From the above it is apparent that changes and variations may be made to the described steering lock 10 without therefore departing from the scope of protection defined by the claims.
Specifically, both the body 18 made of plastic material and the insert 19 may display different dimensions and/or geometries from those shown by way of example.

## Claims

1. A steering lock (10) for vehicles including an attachment and supporting structure (11) having an accommodating portion (13) and an attachment portion (14) to a fixed tubular body (3) accommodating a steering shaft (5); the steering lock further including a shifting angular locking member (26) movable with respect to said structure through an opening (4) obtained in the attachment portion (14) between a retracted home position, and an advanced angular-locking position of the steering shaft with respect to said tubular body (3), said structure including a metal insert (19) at least partially accommodated in said attachment portion (14) and an external hollow body (18) made of plastic material, **characterized in that** said external hollow body (18) is co-moulded on said metal insert (19); said metal insert (19) including a half collar portion (20) at least partially accommodated within said attachment portion (14) and a hollow rod (21) as sliding guide for said shifting angular locking member (26) and extending within said accommodating portion (13).

2. A steering lock according to Claim 1, **characterized in that** said metal insert (19) further includes an anchoring portion (28) overhangingly protruding from said half-collar portion (20) inside said attachment portion (14).

3. A steering lock according to claim 2, **characterized in that** said anchoring portion engages a retaining seat (4) obtained on said fixed tubular body (3) for locking said attachment and supporting structure (11) with respect to said fixed tubular body (3).

4. A steering lock according to claim 2 or 3, **characterized in that** said anchoring portion includes two parallel retaining protrusions (28) transversally spaced to each other; said retaining protrusions (28) at least partially delimiting a sliding guide (23) for said shifting member (26).

5. A steering lock according to claim 4, **characterized in that** said shifting member (26) is delimited by a rough side surface (27) adapted to generate a friction component for maintaining said shifting member (26) in said angular-locking position.

6. A steering lock according to claim 5, **characterized in that** said rough surface displays a variable roughness between 3 and 7 Ra.

7. A steering lock according to any one of the preceding claims, **characterized in that** said external hollow body (18) made of plastic material is a monolithic body.

8. A steering lock according to any one of the preceding claims, **characterized in that** said insert is made of Zama.

## Patentansprüche

1. Lenksperre (10) für Fahrzeuge, umfassend einen Anbau und eine Unterstützungsstruktur (11) mit einem Aufnahmebereich (13) und einem Anlagebereich (14) an einem befestigten röhrenförmigen Körper (3) zur Aufnahme einer Lenkstange (5); die Lenksperre umfasst ferner einen beweglichen Winkelsperrkörper (26), welcher gegenüber der Struktur durch eine Öffnung (4) in dem Anlagebereich (14) zwischen einer zurückgezogenen Ruheposition und einer vorgeschobenen Winkelverriegelungsposition der Lenkspindel gegenüber dem röhrenförmigen Körper bewegbar ist, wobei die Struktur eine metallische Einlage (19) umfasst, welche zumindest teilweise in dem Anlagebereich (14) aufgenommen ist, und einen äußeren Hohlkörper (18) aus Kunststoffmaterial, **dadurch gekennzeichnet, dass** der äußere Hohlkörper (18) an die metallische Einlage angespritzt ist, wobei die metallische Einlage ein halbes Bundteil (20) umfasst, welches zumindest teilweise in dem Anlagebereich (14) aufgenommen ist, und einen hohlen Balken (21) als Gleitführung für den beweglichen Winkelsperrkörper (26), welches sich in den Aufnahmebereich (13) erstreckt.

2. Lenksperre gemäß Anspruch 1, **dadurch gekennzeichnet, dass** die metallische Einlage außerdem einen Befestigungsbereich (28) aufweist, welcher von dem halben Bundteil (20) überhängend in den Anlagebereich (14) vorsteht.

3. Lenksperre nach Anspruch 2, **dadurch gekennzeichnet, dass** der Befestigungsbereich einen Haltesitz (4) kontaktiert, welcher in dem befestigten röhrenförmigen Körper (3) enthalten ist zum Versperren des Anbaus und der Unterstützungsstruktur (11) gegenüber dem befestigten röhrenförmigen Körper.

4. Lenksperre nach Anspruch 2 oder 3, **dadurch gekennzeichnet, dass** der Befestigungsbereich zwei parallele Sicherungsvorsprünge (28) umfasst, welche transversal voneinander beabstandet sind; die Sicherungsvorsprünge (28) beschränken zumindest teileweise eine Gleitführung (23) für den Sperrkörper (26).

5. Lenksperre nach Anspruch 4, **dadurch gekennzeichnet, dass** der Sperrkörper (26) durch eine rauhe seitliche Oberfläche (27) begrenzt ist, welche geeignet ist, eine Reibungskomponente zum Halten des Sperrkörpers (26) in der Winkelsperrposition zu erzeugen.

6. Lenksperre nach Anspruch 5, **dadurch gekennzeichnet, dass** die rauhe Oberfläche eine veränderliche Rauheit zwischen 3 und 7 Ra zeigt.

7. Lenksperre nach einem der vorhergehenden Ansprüche, **dadurch gekennzeichnet, dass** der externe Hohlkörper (18) aus Kunststoffmaterial ein monolithischer Körper ist.

8. Lenksperre nach einem der vorhergehenden Ansprüche, **dadurch gekennzeichnet, dass** die Einlage aus Zama hergestellt ist.

## Revendications

1. Verrouillage de direction (10) pour véhicules comprenant une structure de fixation et de support (11) ayant une partie de logement (13) et une partie de fixation (14) sur un corps tubulaire fixe (3) logeant un arbre de direction (5) ; le verrouillage de direction comprenant en outre un élément de verrouillage angulaire de déplacement (26) mobile par rapport à ladite structure par le biais d'une ouverture (4) obtenue dans la partie de fixation (14) entre une position de départ rétractée et une position de verrouillage angulaire avancée de l'arbre de direction par rapport audit corps tubulaire (3), ladite structure comprenant un insert métallique (19) au moins partiellement logé dans ladite partie de fixation (14) et un corps creux externe (18) réalisé à partir de matière plastique, **caractérisé en ce que** le corps creux externe (18) est co-moulé sur ledit insert métallique (19) ; ledit insert métallique (19) comprenant une partie de demi-collier (20) au moins partiellement logée à l'intérieur de la partie de fixation (14) et une tige creuse (21) en tant que guide de coulissement pour ledit élément de verrouillage angulaire de déplacement (26) et s'étendant à l'intérieur de ladite partie de logement (13).

2. Verrouillage de direction selon la revendication 1, **caractérisé en ce que** ledit insert métallique (19) comprend en outre une partie d'ancrage (28) faisant saillie en surplomb par rapport à ladite partie de demi-collier (20) à l'intérieur de ladite partie de fixation (14).

3. Verrouillage de direction selon la revendication 2, **caractérisé en ce que** ladite partie d'ancrage met en prise un siège de retenue (4) obtenu sur ledit corps tubulaire fixe (3) pour verrouiller ladite structure de fixation et de support (11) par rapport audit corps tubulaire fixe (3).

4. Verrouillage de direction selon la revendication 2 ou 3, **caractérisé en ce que** ladite partie d'ancrage comprend deux saillies de retenue parallèles (28) espacées transversalement l'une de l'autre ; lesdites saillies de retenue (28) délimitant au moins partiellement un guide de coulissement (23) pour ledit élément de déplacement (26).

5. Verrouillage de direction selon la revendication 4, **caractérisé en ce que** ledit élément de déplacement (26) est délimité par une surface latérale rugueuse (27) adaptée pour générer un composant de friction afin de maintenir ledit élément de déplacement (26) dans ladite position de verrouillage angulaire.

6. Verrouillage de direction selon la revendication 5, **caractérisé en ce que** ladite surface rugueuse laisse apparaître une rugosité variable comprise entre 3 et 7 Ra.

7. Verrouillage de direction selon l'une quelconque des revendications précédentes, **caractérisé en ce que** ledit corps creux externe (18) réalisé à partir d'une matière plastique est un corps monolithique.

8. Verrouillage de direction selon l'une quelconque des revendications précédentes, **caractérisé en ce que** ledit insert est réalisé à partir de Zamak.
